(19) **Europäisches Patentamt / European Patent Office / Office européen des brevets**

(11) **EP 4 596 257 A1**

(12) **EUROPEAN PATENT APPLICATION**
published in accordance with Art. 153(4) EPC

(43) Date of publication:
06.08.2025 Bulletin 2025/32

(21) Application number: 23872007.2

(22) Date of filing: 15.09.2023

(51) International Patent Classification (IPC):
B60C 9/00 (2006.01)    B60C 1/00 (2006.01)
B60C 9/04 (2006.01)    C08K 3/04 (2006.01)
C08L 7/00 (2006.01)    C08L 9/04 (2006.01)
C08L 9/06 (2006.01)    C08L 67/02 (2006.01)
D02G 3/48 (2006.01)    D06M 15/693 (2006.01)
D07B 1/16 (2006.01)

(52) Cooperative Patent Classification (CPC):
B60C 1/00; B60C 9/00; B60C 9/04; C08K 3/04;
C08L 7/00; C08L 9/04; C08L 9/06; C08L 67/02;
D02G 3/48; D06M 15/693; D07B 1/16

(86) International application number:
PCT/JP2023/033783

(87) International publication number:
WO 2024/070779 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022156780
24.11.2022 JP 2022187816

(71) Applicant: BRIDGESTONE CORPORATION
Chuo-ku
Tokyo 104-8340 (JP)

(72) Inventor: GIZA Emil
Tokyo 104-8340 (JP)

(74) Representative: Marks & Clerk LLP
15 Fetter Lane
London EC4A 1BW (GB)

(54) **PET FIBER-RUBBER COMPOSITE AND TIRE**

(57) To provide a PET fiber-rubber composite with excellent strength and low rolling resistance characteristic when the composite is applied to a tire, without increasing the total fineness of the cord or the thickness of the sheet. To solve the above problem, the present disclosure is a sheet-like PET fiber-rubber composite including PET fiber cords coated with a coating rubber. The PET fiber-rubber composite satisfies the following formula (1): $(A/B) /$ a cord total fineness $\geq 0.3 \ldots (1)$, where A: cord strength (N) $\times$ fiber occupancy rate, fiber occupancy rate: cross-sectional area of PET fiber cord $(mm^2)$ / (thickness of the composite (mm) $\times$ (diameter of PET fiber cord (mm) + inter-cord spacing of the PET fiber cords (mm))), B: $\tan\delta$ of the coating rubber $\times$ rubber occupancy rate, rubber occupancy rate: (1 - fiber occupancy rate), and cord total fineness: sum of finenesses of PET fibers forming a cord.

*FIG. 1*

**Description**

TECHNICAL FIELD

The present disclosure relates to a PET fiber-rubber composite and a tire.

BACKGROUND

In recent years, cords made from polyethylene terephthalate (PET) fibers have been primarily used as carcass materials for pneumatic tires. This is primarily because PET fibers exhibit superior balance in properties such as strength, modulus, and dimensional stability compared to conventional materials, such as nylon fibers and rayon fibers, and PET fibers are low-cost materials.

However, conventional PET fibers have been unsatisfactory in terms of contribution to tire strength and weight reduction. In light of the recent environmental demands pertaining to automobiles, there is a growing need for cords that have even higher strength and contribute more significantly to weight reduction of tires. Thus, the development of PET fiber-rubber composites with higher strength and lower rolling resistance has been pursued by replacing conventional PET fibers with PET fibers having an even higher strength.

As a technique to increase the strength of PET fiber-rubber composites, for example, the technique achieved by increasing the total fineness of PET fiber cords is known. However, although increasing the total fineness of the fibers can increase the strength, it also results in thicker cords, necessitating thicker PET fiber-rubber composites. This, in turn, negatively affects the rolling resistance when the PET fiber-rubber composites are applied to tires.

As a technique to improve the rolling resistance when a PET fiber-rubber composite is applied to a tire, PTL 1 discloses a method to reduce the hysteresis loss during driving by forming the cross-sectional shape of PET fiber cords closer to a perfect circle.

According to this technique, it is possible to reduce the rolling resistance (hereinafter referred to as "being excellent in low rolling resistance characteristic") when the composite is applied to a tire while maintaining durability.

However, although the technique in PTL 1 provides a certain effect on maintaining durability and reducing rolling resistance, balancing both strength and low rolling resistance characteristic at an even higher level was desired.

CITATION LIST

Patent Literature

PTL 1: JP 2011-251582 A

SUMMARY

(Technical Problem)

Accordingly, it could be helpful to provide a PET fiber-rubber composite that is excellent in strength and low rolling resistance characteristic when the PET fiber-rubber composite is applied to a tire, without incurring an increase in the total fineness of the cords or the thickness of the sheet.

It could also be helpful to provide a tire that is excellent in strength and low rolling resistance characteristic.

(Solution to Problem)

The main features of the present disclosure for solving the above problem are as follows.

A PET fiber-rubber composite of the present disclosure is a sheet-like PET fiber-rubber composite comprising PET fiber cords coated with a coating rubber,

the PET fiber-rubber composite satisfying the following formula (1):

$$(A/B) \,/\, a\ cord\ total\ fineness \geq 0.3 \qquad \ldots (1)$$

where A is defined as: a cord strength (N) $\times$ a fiber occupancy rate,
the fiber occupancy rate is defined as: a cross-sectional area of a PET fiber cord $(mm^2)$ / (a thickness of the composite (mm) $\times$ (a diameter of a PET fiber cord (mm) + an inter-cord spacing of the PET fiber cords (mm))), and

B is defined as: tanδ of the coating rubber × a rubber occupancy rate,
the rubber occupancy rate is defined as: (1 - the fiber occupancy rate), and
the cord total fineness is a sum of finenesses of PET fibers forming a cord.

The above-described configuration can improve the strength and low rolling resistance characteristic when the PET fiber-rubber composite is applied to a tire, without incurring an increase in the total fineness of the cords or the thickness of the sheet.
A tire of the present disclosure comprises the PET fiber-rubber composite of the present disclosure described above.
The above-described configuration can achieve excellent strength and low rolling resistance characteristic.

(Advantageous Effect)

According to the present disclosure, it is possible to provide a PET fiber-rubber composite that is excellent in strength and low rolling resistance characteristic when the PET fiber-rubber composite is applied to a tire, without incurring an increase in the total fineness of the cords or the thickness of the sheet. Furthermore, according to the present disclosure, it is possible to provide a tire that is excellent in durability and low rolling resistance characteristic.

BRIEF DESCRIPTION OF THE DRAWINGS

In the accompanying drawings:

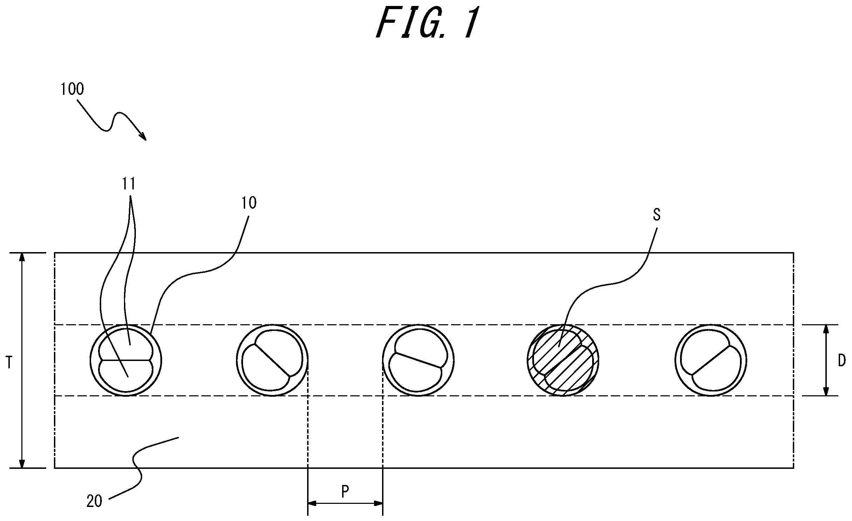

FIG. 1 is a diagram schematically illustrating a cross-section of a PET fiber-rubber composite according to one embodiment of the present disclosure.

DETAILED DESCRIPTION

Hereinafter, a PET fiber-rubber composite and a tire of the present disclosure will be described in detail based on embodiments thereof.
Here, FIG. 1 schematically illustrates a cross-section of a PET fiber-rubber composite according to one embodiment of the present disclosure.

<PET Fiber-Rubber composite>

As illustrated in FIG. 1, the PET fiber-rubber composite of the present disclosure is a sheet-like PET fiber-rubber composite 100 including PET fiber cords 10 coated with a coating rubber 20.
The PET fiber-rubber composite of the present disclosure satisfies the following formula (1):

$$(A/B) \ / \ \text{cord total fineness} \geq 0.3 \qquad \qquad \ldots (1)$$

Here, A in the above formula (1) represents "the cord strength (N) × the fiber occupancy ratio". By increasing the value of A, the strength of the PET fiber-rubber composite can be increased. Furthermore, the fiber occupancy ratio in A is defined as "the cross-sectional area of a PET fiber cord (mm$^2$) / (the thickness of the PET fiber-rubber composite (mm) × (the diameter of a PET fiber cord (mm) + the inter-cord spacing of the PET fiber cords (mm)))". By increasing this value, it is possible to reduce the thickness of the coating rubber 20, which contributes to the reduction in rolling resistance. Additionally, B in the above formula (1) represents the "rubber occupancy ratio". By setting a small value to B, the volume of rubber in the PET fiber-rubber composite is reduced, which contributes to weight reduction and the reduction in rolling resistance. Moreover, the cord total fineness in the above formula (1) represents the sum of the finenesses of PET fibers 11. As this value increases, the thickness of the PET fiber 10 is increased, meaning higher strength but also increased mass.
In the present disclosure, by adjusting the ratio A/B to the cord total fineness to 0.3 or more, it becomes possible to increase the strength of the PET fiber-rubber composite even when cords with a low fineness are used (when the mass of the PET fiber cords is small).
From a similar perspective, the PET fiber-rubber composite of the present disclosure preferably satisfies the following formula (1)':

$$(A/B) \ / \ \text{cord total fineness} \geq 0.45 \qquad \qquad \ldots (1)'$$

Hereinafter, the PET fiber cords and the coating rubber that constitute the PET fiber-rubber composite of the present disclosure will be described.

(PET Fiber Cord)

The PET fiber cords are cords made of polyethylene terephthalate (PET) fibers and have an excellent balance of properties such as strength, modulus, dimensional stability, and manufacturing cost.

The PET fiber cords may be single-twist cords or multi-twist cords each composed of two or more cords. The structure of the PET fiber cords can be appropriately selected according to the required performances of the PET fiber cords.

The raw material for the PET fiber cords is not particularly limited and may be derived from synthetic products, may be derived from biological resources such as plant-based resources, animal-based resources, or microbial resources, may be obtained by mechanical recycling involving grinding, melting, and re-spinning resin products, or may be obtained by chemical recycling involving depolymerization and repolymerization of resin products, for example.

Moreover, the cord strength of the PET fiber cord is preferably 160 N or more, and more preferably 165 N or more, because the strength of the PET fiber-rubber composite can be further increased.

It should be noted that the cord strength of the PET fiber cord can be appropriately controlled by adjusting, for example, the total fineness, the number of twists, and the raw yarn strength of the cord, and other factors.

Additionally, the raw yarn strength of a PET fiber constituting the PET fiber cord is preferably 7.8 cN/dtex or more, and more preferably 8.0 cN/dtex or more. Since this results in an increased strength of the PET fiber cord, the strength of the PET fiber-rubber composite can be further increased.

It should be noted that the raw yarn strength of the PET fiber can be increased by adjusting the molecular weight, crystallinity, and crystal orientation of the PET resin, and other factors.

Furthermore, the total fineness of the PET fiber cords is preferably from 1000 to 4800 dtex, and more preferably from 2000 to 4000 dtex. When the total fineness of the PET fiber cords is 1000 dtex or more, the strength of the PET fiber-rubber composite can be further increased. On the other hand, when the total fineness of the PET fiber cords is 4800 dtex or less, it is possible to more reliably suppress the degradation of rolling resistance when the PET fiber-rubber composite is applied to a tire.

Here, the total fineness of the PET fiber cords refers to the sum of the finenesses of the PET fibers constituting the cords, and the total fineness can be controlled by adjusting the fineness and the number of twists of the PET fibers, and other factors.

Additionally, from the perspective of maintaining plunger energy, the diameter of a PET fiber cord is preferably 0.45 mm or more, and more preferably 0.50 mm or more. Furthermore, from the perspective of reducing rolling resistance, the diameter of a PET fiber cord is preferably 0.80 mm or less, and more preferably 0.70 mm or less.

Furthermore, the fineness of the PET fibers is preferably from 550 to 2200 dtex, and more preferably from 1100 to 1670 dtex. When the fineness of the PET fibers is 550 dtex or more, the strength of the PET fiber-rubber composite can be further increased. On the other hand, when the fineness of the PET fibers is 2200 dtex or less, it is possible to more reliably suppress the degradation of rolling resistance when the PET fiber-rubber composite is applied to a tire.

It should be noted that the fineness of the PET fibers can be controlled by adjusting the type and manufacturing conditions of fibers, and other factors.

Additionally, the density of cords of the PET fiber cords is preferably 120 /10 cm or more, and more preferably 140 /10 cm or more, because the strength of the PET fiber-rubber composite can be further increased.

It should be noted that the density of cords of the PET fiber cords refers to the number of PET fiber cords per 10 cm in the direction in which the cords are aligned in the PET fiber-rubber composite (in FIG. 1, the density of cords corresponds to the number of PET fiber cords per 10 cm in the horizontal direction).

Furthermore, the fiber occupancy rate in the PET fiber-rubber composite is not particularly limited as long as the above formula (1) is satisfied. However, from the perspective of balancing high strength and low rolling resistance characteristic when the composite is applied to a tire at an even higher level, the fiber occupancy rate is preferably 30% or more and 40% or less, and more preferably 35% or more and 40% or less.

It should be noted that the fiber occupancy rate, as described above, is determined as: the cross-sectional area of a PET fiber cord ($mm^2$) / (the thickness of the PET fiber-rubber composite (mm) $\times$ (the diameter of a PET fiber cord (mm) + the inter-cord spacing of the PET fiber cords (mm))).

Here, the diameter of a PET fiber cord refers to the diameter D of a PET fiber cord 10 that constitutes the PET fiber-rubber composite 100 in a cross-section, as illustrated in FIG. 1.

In addition, the cross-sectional area of a PET fiber cord refers to the area S of the cross-section of a PET fiber cord 10 that constitutes the PET fiber-rubber composite 100, as illustrated in FIG. 1.

Furthermore, the inter-cord spacing of the PET fiber cords refers to the shortest distance P between adjacent cords 10 in the cross-section of the PET fiber cords 10 that constitute the PET fiber-rubber composite 100, as illustrated in FIG. 1.

(Adhesive Composition)

Furthermore, it is preferable that the PET fiber cords are subjected to an adhesive treatment using an adhesive composition.

The adhesive composition may include, for example, a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C), and optionally further include a rubber latex (D). By performing an adhesive treatment on the PET fiber cords using such an adhesive composition, the adhesion between the PET fiber cords and the elastomer (coating rubber) under high-temperature conditions can be improved.

Conventionally, the adhesive treatment of PET fiber cords involves a so-called two-bath process in which epoxy or isocyanate is applied to the surfaces of the cords, followed by treatment with a resin formed by mixing resorcinol, formaldehyde, and latex (hereinafter referred to as RFL resin). However, with this approach, the resin used in the first-stage bath can become extremely hard, increasing the strain input into the PET fiber cords, which can decrease the fatigue resistance of the cords. Additionally, while such an RFL resin can achieve sufficient adhesion between the cords and elastomer at room temperature, the adhesion may be reduced significantly at high temperatures of 130°C or higher. In contrast, usage of a single-stage bath mixture (adhesive composition) containing a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C) can ensure sufficient adhesion with the elastomer (coating rubber) even at high temperatures of 180°C or higher without hardening the PET fiber cords.

The main chain of the thermoplastic polymer (A) has primarily a linear structure, and the main chain is preferably an ethylene-based addition polymer such as an acrylic polymer, vinyl acetate-based polymer, and vinyl acetateethylene-based copolymer; an urethane-based high-molecular polymer; or the like, for example. However, the thermoplastic polymer (A) is not limited to the above-mentioned ethylene-based addition polymer or urethane-based high-molecular polymer, as long as it can inhibit flowability of the resin at high temperatures and ensure the rupture tenacity of the resin through crosslinking of the functional group on the pendant group.

Preferred examples of the functional group on the pendant group of the thermoplastic polymer (A) include oxazoline groups, bismaleimide groups, (blocked) isocyanate groups, aziridine groups, carbodiimide groups, hydrazino groups, epoxy groups, and epithio groups.

The thermoplastic polymer (A), the thermally reactive-type aqueous urethane resin (B), the epoxy compound (C), and the rubber latex (D) described above that can be used may be those disclosed in JP 2023-040157 A or those disclosed in JP 2023-030762 A.

In the adhesive treatment of the PET fiber cords, a three-component mixture (adhesive composition) of the thermoplastic polymer (A), the thermally reactive-type aqueous urethane resin (B), and the epoxy compound (C) is preferably used as the treatment liquid for the first-stage bath, and a conventional RFL resin liquid is used as the treatment liquid for the secondstage bath. Additionally, in the above adhesive treatment, it is also possible to perform single-stage bath treatment using a mixture (adhesive composition) of the thermoplastic polymer (A), the thermally reactive-type aqueous urethane resin (B), the epoxy compound (C), and the rubber latex (D).

In the above-described adhesive composition, the proportion of the thermoplastic polymer (A) (dry mass ratio) is preferably 2 to 75%, the proportion of the thermally reactive-type aqueous urethane resin (B) (dry mass ratio) is preferably 15 to 87%, the proportion of the epoxy compound (C) (dry mass ratio) is preferably 11 to 70%, and the proportion of the rubber latex (D) (dry mass ratio) is preferably 20% or less.

In the meantime, from a perspective of environmental protection, it is preferable to use a dip treatment solution that does not contain resorcinol and formaldehyde as the adhesive composition for the PET fiber cords. An example of such a dip treatment solution is, for example, a composition containing a rubber latex (a) with an unsaturated diene and one or more compounds (b) selected from compounds containing a skeletal structure made of polyether and an amine functional group, compounds with an acrylamide structure, polypeptides, polylysine, and carbodiimides. Additionally, an example of such a dip treatment solution is a composition containing, in addition to the above-described rubber latex (a) and compound (b), one or more selected from an aqueous compound (c) with a (thermally dissociative blocked) isocyanate group, a polyphenol (d), and a polyvalent metal salt (e).

Furthermore, as a dip treatment solution that does not contain resorcinol and formaldehyde, a composition containing polyphenols (I) and aldehydes (II) may also be used. Such a composition may further include at least one of an isocyanate compound (III) and a rubber latex (IV), in addition to the polyphenols (I) and the aldehydes (II).

When an adhesive composition to treat (coat) the PET fiber cords with adhesive contains the polyphenols (I) and the aldehydes (II), good adhesion can be achieved even when resorcinol is not used, considering environmental load.

- Polyphenols (I)

When the adhesive composition includes the polyphenols (I) as a resin component, the adhesion with the PET fiber cords can be enhanced. Here, the polyphenols (I) are typically water-soluble polyphenols and are not particularly limited as long as they are polyphenols other than resorcinol (resorcinol). In the polyphenols (I), the number of aromatic rings or hydroxyl groups can be appropriately selected.

From the perspective of achieving further excellent adhesion, the polyphenols (I) preferably have two or more hydroxyl groups, and more preferably have three or more hydroxyl groups. When the polyphenols have three or more hydroxyl groups, the polyphenols or the condensates thereof dissolve in the adhesive composition (dip treatment solution) containing water. Since this allows the polyphenols to be uniformly distributed in the adhesive composition, further excellent adhesion can be achieved. Furthermore, if the polyphenols (I) are polyphenols containing two or more aromatic rings, each aromatic ring may have two or three hydroxyl groups located at the ortho, meta, or para positions.

As the polyphenols (I), the polyphenol compounds disclosed in WO 2022/130879 A1 can be used, for example. These polyphenols (I) may be used alone or in combination of two or more.

- Aldehydes (II)

When the adhesive composition includes the aldehydes (II) as a resin component in addition to the above-described polyphenols (I), high adhesion can be achieved in conjunction with the above-described polyphenols (I). Here, the aldehydes (II) are not particularly limited and can be selected as appropriate depending on the required performances. It should be noted that in this specification, the aldehydes (II) encompass derivatives of aldehydes derived from aldehydes.

Examples of the aldehydes (II) include, for example, monoaldehydes such as formaldehyde, acetaldehyde, butyraldehyde, acrolein, propionaldehyde, chloral, butyraldehyde, caproaldehyde, and allyl aldehyde; aliphatic dialdehydes such as glyoxal, malonaldehyde, succinaldehyde, glutaraldehyde, and adipaldehyde; aldehydes containing an aromatic ring; and dialdehyde starch. These aldehydes (II) can be used alone or in combination of two or more.

The aldehydes (II) are preferably aldehydes having an aromatic ring or contain aldehydes having an aromatic ring because they provide further excellent adhesion. Moreover, the aldehydes (II) are preferably free of formaldehyde. Here, "free of formaldehyde" means, for example, that the formaldehyde content is less than 0.5 mass% of the total mass of the aldehydes.

In the adhesive composition, it is preferable that the polyphenols (I) and the aldehydes (II) are in a condensed state, and the mass ratio of aldehydes having an aromatic ring to polyphenols (the content of aldehydes having an aromatic ring/content of polyphenols) is 0.1 or more and 3 or less. This is because this ratio optimizes the hardness and adhesion of the resin formed as a condensation product of the polyphenols and the aldehydes having an aromatic ring. From a similar perspective, in the adhesive composition, the mass ratio of polyphenols to aldehydes having an aromatic ring (the content of aldehydes having an aromatic ring/content of polyphenols) is more preferably 0.25 or more, and more preferably 2.5 or lower.

The above-described mass ratio refers to the mass ratio based on the mass of the dried materials (solid content ratio).

In addition, the total content of the polyphenols (I) and the aldehydes (II) in the adhesive composition is preferably 3 to 30 mass% because further excellent adhesion is ensured without compromising workability, etc. From a similar perspective, the total content of the polyphenols (I) and the aldehydes (II) in the adhesive composition is more preferably 5 mass% or more and more preferably 25 mass% or less.

The above-described total content also refers to the total content based on the mass of the dried materials (solid content ratio).

- Isocyanate Compound (III)

The adhesive composition preferably contains an isocyanate compound (III), in addition to the polyphenols (I) and the aldehydes (II) described above. In this case, the adhesion of the adhesive composition is further enhanced through the synergistic effect with the polyphenols (I) and the aldehydes (II).

Here, the isocyanate compound (III) is a compound that has an effect of promoting adhesion to the resin material, which is the adherend of the adhesive composition (e.g., phenol/aldehyde resin obtained through condensation of the polyphenols (I) and the aldehydes (II)), and is compound contains an isocyanate group as a polar functional group. The isocyanate compound (III) may be used alone or in combination of two or more.

The isocyanate compound (III) is not particularly limited, but from the perspective of further improving adhesion, it preferably includes a (blocked) isocyanate group-containing aromatic compound. The inclusion of a (blocked) isocyanate group-containing aromatic compound in the adhesive composition results in the distribution of the (blocked) isocyanate group-containing aromatic compound near the interface between the PET fiber cords and the adhesive composition, thereby providing an effect of further promoting the adhesion. This effect allows the adhesive composition to achieve an even higher level of adhesion with the PET fiber cords.

Examples of (blocked) isocyanate group-containing aromatic compounds that may be used include those described in JP 2023-040157 A and those described in JP 2023-030762 A.

The content of the isocyanate compound (III) in the above-described adhesive composition is not particularly limited, but from the perspective of more reliably ensuring further excellent adhesion, the content is preferably 5 to 65 mass%. From a similar perspective, the content of the isocyanate compound (III) in the adhesive composition is more preferably 10 mass% or more and more preferably 45 mass% or less.

It should be noted that the above-mentioned content is the content based on the mass of the dried materials (solid content ratio).

- Rubber Latex (IV)

The adhesive composition may substantially contain a rubber latex (IV), in addition to the polyphenol (I), the aldehydes (II), and the isocyanate compound (III) described above. This allows the adhesive composition to further enhance adhesion to rubber members.

Here, the rubber latex (IV) is not particularly limited and examples include, besides natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinyl pyridine-styrene-butadiene copolymer rubber (Vp). These rubber latexes (IV) may be used alone or in combination of two or more types.

When preparing an adhesive composition containing the rubber latex (IV), it is preferable to mix the rubber latex (IV) with the phenols (I) and the aldehydes (II) before the isocyanate compound (III) is added.

The content of the rubber latex (IV) in the adhesive composition is preferably 20 mass% or more, more preferably 25 mass% or more, and is preferably 70 mass% or less, and more preferably 60 mass% or less.

The method for producing the adhesive composition is not particularly limited, but examples include, for example, a method of mixing and aging raw materials such as the polyphenols (I), the aldehydes (II), and the rubber latex (IV), or a method of mixing and aging the polyphenols (I) and the aldehydes (II) first, then adding the rubber latex (IV) followed by further aging. In cases where the raw materials of the adhesive composition include the isocyanate compound (III), the method may include adding the rubber latex (IV), aging the mixture, and then adding the isocyanate compound (III).

(Coating Rubber)

The coating rubber refers to the rubber that coats the PET fiber cords.

In the PET fiber-rubber composite of the present disclosure, the coating rubber is not particularly limited, other than defining the rubber occupancy rate of the coating rubber so as to satisfy the above formula (1). The composition and physical properties of the coating rubber may be appropriately selected according to the required performances.

For example, from the perspective of further improving the low rolling resistance characteristic when the PET fiber-rubber composite is applied to a tire, it is preferable that the coating rubber contains a rubber component containing 60 mass% or more of natural rubber and 40 mass% or less of non-oil extended styrene-butadiene rubber, and 30 to 60 parts by mass of carbon black with a nitrogen adsorption specific surface area ($N_2SA$) of 60 $m^2$/g or less per 100 parts by mass of the rubber component. Such a coating rubber composition has excellent low heat generation properties, enabling a further reduction in rolling resistance when the composite is applied to a tire.

There are no particular limitations on the rubber component of the coating rubber; however, as described above, the rubber component preferably contains 60 mass% or more of natural rubber and 40 mass% or less of non-oil extended styrene-butadiene rubber. The inclusion of 60 mass% or more of natural rubber and 40 mass% or less of non-oil extended styrene-butadiene rubber can contribute to the low rolling resistance characteristic when the PET fiber-rubber composite is applied to a tire.

In addition to the above-described natural rubber and non-oil extended SBR, the rubber component may also include various synthetic rubbers or nondiene rubbers, such as polyisoprene rubber (IR), polybutadiene rubber (BR), acrylonitrile-butadiene copolymer rubber (NBR), isoprene-isobutylene copolymer rubber (IIR), ethylene-propylene-diene copolymer rubber (EPDM), halogenated butyl rubber (HR), and chloroprene rubber (CR), for example.

Furthermore, it is preferable that the coating rubber contains 30 to 60 parts by mass of carbon black with a nitrogen adsorption specific surface area ($N_2SA$) of 60 $m^2$/g or less, per 100 parts by mass of the rubber component.

By including carbon black with an $N_2SA$ of 60 $m^2$/g or less in the coating rubber, it is possible to suppress the degradation of rolling resistance when the PET fiber-rubber composite is applied to a tire while maintaining the high strength of the PET fiber-rubber composite. From a similar perspective, it is more preferable that the $N_2SA$ of the carbon black is 45 $m^2$/g or less.

By adjusting the content of the carbon black in the coating rubber to 30 parts by mass or more per 100 parts by mass of the rubber component, the strength of the PET fiber-rubber composite can be enhanced. By adjusting the content of the content of carbon black to 60 parts by mass or less per 100 parts by mass of the rubber component, it is possible to suppress the degradation of rolling resistance when the PET fiber-rubber composite is applied to a tire. From a similar perspective, it is more preferable that the content of carbon black is 35 to 45 parts by mass per 100 parts by mass of the rubber component.

In addition to the rubber component and carbon black described above, the coating rubber may appropriately include additives commonly used in the rubber industry, such as fillers (e.g., silica), vulcanizing agents, vulcanization accelerators, bismaleimide compounds, softeners, stearic acid, zinc oxide, resins, waxes, and oils, for example, as long as the effects of the present disclosure are not compromised.

In the sheet-like composite, as illustrated in FIG. 1, the inter-cord spacing P of the PET fiber cords is preferably 0.15 mm or more, and more preferably 0.17 mm or more, from the perspective of the durability of the tire upon high-speed driving. Additionally, from the perspective of maintaining the plunger energy, the inter-cord spacing P of the PET fiber cords is preferably 0.45 mm or less, and more preferably 0.40 mm or less.

(Sheet-Like Composite)

As illustrated in FIG. 1, the PET fiber-rubber composite of the present disclosure is a sheet-like composite 100.

Here, the sheet-like composite is not particularly limited as long as the above formula (1) is satisfied. However, from the perspective of obtaining further superior strength, the tensile strength thereof is preferably more than 23,000 N/dm. The strength of the composite (N/dm) is calculated as the tensile tenacity of a single cord measured according to ASTM D885 multiplied by the number of cords per 10 cm width.

Additionally, the thickness of the sheet-like composite is preferably 1.8 mm or less, more preferably 1.5 mm or less, even more preferably 1.2 mm or less, and most preferably 1.0 mm or less.

When the thickness of the sheet-like composite is 1.8 mm or less, the PET fiber-rubber composite can be made lighter, thereby more reliably suppressing the degradation of rolling resistance when the composite is applied to a tire.

It should be noted that the thickness of the sheet-like composite refers to the thickness T of the composite when it is cut along a plane perpendicular to the direction in which the cords extend in the composite, as illustrated in FIG. 1.

With regard to the sheet-like composite, it is preferable that $\tan\delta$ of the coating rubber measured using a spectrometer (manufactured by Kamishima Seisakusho Co., Ltd.) under conditions of a temperature of 24°C, a strain of 1%, and a frequency of 52 Hz is 0.15 or less, more preferably 0.10 or less, from the perspective of reducing rolling resistance.

It should be noted that $\tan\delta$ of the coating rubber mentioned in this specification refers to the value of $\tan\delta$ measured under the conditions of a temperature of 24°C, a strain of 1%, and a frequency of 52 Hz using a spectrometer (manufactured by Kamishima Seisakusho Co., Ltd.).

As described above, the PET fiber-rubber composite of the present disclosure is required to satisfy the above formula (1), and preferably satisfies the above formula (1)'.

As the value of A (the cord strength × the fiber occupancy rate) in the above formula (1) increases, the strength of the PET fiber-rubber composite is increased. As the value of B ($\tan\delta$ of the coating rubber × the rubber occupancy rate) decreases, the rolling resistance is reduced.

As described above, by adjusting the value of (A/B) / cord total fineness to 0.3 or more (adjusting so that the above formula (1) is satisfied), it is possible to achieve a high strength while reducing the number of cords and lowering the rolling resistance.

The method for manufacturing the PET fiber-rubber composite of the present disclosure is not particularly limited and the PET fiber-rubber composite can be produced by known methods.

As a method for coating the PET fiber cords with the coating rubber, the following method can be used, for example.

A predetermined number of PET fiber cords are arranged in a reed screen-like shape. Unvulcanized rubber sheets that are made from the rubber composition and have a certain thickness are placed on both the top and bottom of the PET fiber cords so that the PET fiber cords are sandwiched by the unvulcanized rubber sheets. Thereafter, vulcanization is carried out at a temperature of approximately 160°C for about 20 minutes to obtain the PET fiber-rubber composite.

<Tire>

The tire of the present disclosure includes the PET fiber-rubber composite of the present disclosure described above.

By using the PET fiber-rubber composite of the present disclosure as a member forming the tire, excellent durability and low rolling resistance characteristic can be achieved.

The site to which the PET fiber-rubber composite of the present disclosure is applied is not particularly limited.

For example, the PET fiber-rubber composite can be suitably used for a reinforcement member, such as a belt reinforcement layer, carcass ply, wire chafer, and other reinforcement members of various radial tires for automobiles. Among these, the PET fiber-rubber composite is preferably used for a belt reinforcement layer or carcass ply, and more preferably used for a carcass ply.

The carcass ply is a member that constitutes the carcass, and the carcass may be composed of a single layer of carcass ply, or the carcass may be composed of two or more layers of carcass plies.

When the PET fiber-rubber composite is used as a carcass ply, the angle of the PET fiber cords may be substantially perpendicular to the tire circumferential direction, for example, the angle may be 80° to 90°.

Furthermore, the locking structure of the carcass ply in the bead section is not limited to a structure where the carcass ply is wound around the bead core and locked. A structure in which the edge of the carcass ply is sandwiched between two layers of bead cores is also used.

The tire of the present disclosure includes a belt layer. The belt layer may, for example, be composed of a first belt layer and a second belt layer laminated outward of the first belt layer in the tire radial direction.

The first belt layer and the second belt layer are each composed of multiple cords embedded in the coating rubber. The thickness of the first belt layer and the thickness of the second belt layer at the tire center portion are each 1.00 mm or less. When the shortest distance between the cords in the second belt layer and the cords in the first belt layer at the tire center portion is defined as "a," and the shortest distance between the cord at the outermost end in the second belt layer and the cords in the first belt layer is defined as "b," the ratio b/a is preferably 1.8 or more and 4.0 or less.

This configuration ensures excellent durability at the belt edges while reducing rolling resistance.

As described above, by setting the thickness of each belt layer at the tire center portion to 1.00 mm or less, the rolling resistance can be reduced while achieving weight reduction. From a similar perspective, the thickness of the first belt layer at the tire center portion is preferably 0.90 mm or less. Additionally, the thickness of the second belt layer at the tire center portion is preferably 0.90 mm or less. To achieve these thicknesses, the diameter of the cords embedded in the first belt layer and second belt layer and the thicknesses of the coating rubbers 5B and 6B are appropriately selected. It should be noted that the "tire center portion" refers to the region within one-quarter of the tire ground contact width from the tire equatorial plane, in the tire width direction.

Furthermore, when the shortest distance between the cords in the second belt layer and the cords in the first belt layer at the tire center portion is defined as "a," and the shortest distance between the cord at the outermost end in the second belt layer and the cords in the first belt layer is defined as "b," the reason for adjusting the value of the ratio b/a to 1.8 or more and 4.0 or less is that, by increasing the spacing between the cords in the first belt layer and the second belt layer at the belt edges, it is possible to suppress the strain that may cause belt edge separation. In the tire of the present disclosure, adjusting the value of b/a to 1.8 or more improves the durability at the belt edges, particularly the durability against belt edge separation. Additionally, adjusting the value of b/a to 4.0 or less ensures sufficient low rolling resistance as desired for the tire. From a similar perspective, the value of b/a is preferably 1.95 or more, preferably 2.00 or more, and preferably 3.90 or less.

It should be noted that "the shortest distance b between the cord at the outermost end in the second belt layer and the cords in the first belt layer" substantially refers to the shortest distance between the cord at the outermost end in the second belt layer and the tangent line of the multiple cords aligned in the first belt layer.

In the tire of the present disclosure, when the PET fiber-rubber composite of the present disclosure is applied to the carcass ply, the reinforcing fiber cords of the belt reinforcement layer may be appropriately selected. For example, it is preferable to use organic fiber cords with a breaking strength of 6.5 cN/dtex or more, an elongation at break of 10% or more, and an elastic modulus at 7% elongation of 6.0 mN/(dtex·%) or more.

Organic fiber cords with a breaking strength of 6.5 cN/dtex or more, an elongation at break of 10% or more, and an elastic modulus at 7% elongation of 6.0 mN/(dtex·%) or more exhibit high strength at break, significant elongation at break, and high elastic modulus at 7% elongation. By applying organic fiber cords with such physical properties to the belt reinforcement layer, it is possible to suppress the reduction in the plunger durability of the tire while improving the steering stability of the tire.

Here, the breaking strength, elongation at break, and elastic modulus at 7% elongation of the organic fiber cords are those measured at room temperature (23°C). Various physical properties of the organic fiber cords can be measured in accordance with JIS L 1013 "Test Methods for Filament Yarns of Chemical Fibers."

Furthermore, the tire of the present disclosure is preferably a pneumatic tire. The gas to be filled in the pneumatic tire is normal air or air with adjusted oxygen partial pressure, as well as inert gases, such as nitrogen, argon, and helium, may be used.

The method for manufacturing the tire of the present disclosure is not particularly limited and the tire can be manufactured based on conventional methods. In general, a rubber composition containing various components is processed into members without being vulcanized, which are attached and shaped by conventional methods in a tire forming machine, to form a green tire. The green tire is then heated and pressurized in a vulcanizer to produce a tire.

For example, a rubber composition is obtained through kneading. The resulting rubber composition is used to apply rubber on PET fiber cords. An unvulcanized belt, unvulcanized carcass, and other unvulcanized members are laminated. The unvulcanized laminate is vulcanized to obtain a tire.

EXAMPLES

The present disclosure is described in more detail below with reference to Examples, by which the present disclosure is not intended to be limited in any way.

<Examples 1 to 2 and Comparative Examples 1 to 3>

A PET fiber-rubber composite for a carcass ply was prepared according to the conditions summarized in Table 1.

In the preparation of the PET fiber-rubber composite, PET fiber cords and a rubber composition summarized in Table 1 were used to obtain samples of PET fiber-rubber composite with the conditions listed in Table 1 (count of cords, inter-cord spacing, and composite gauge).

The formulation of the rubber composition for the coating rubber that was coated, the conditions of the PET fiber cords (various physical properties and arrangement conditions), and the conditions of the composite (fiber occupancy rate, thickness, coating rubber occupancy rate, and tan$\delta$ of coating rubber, A, B, and (A/B)/cord total fineness) for each sample are summarized in Table 1.

<Evaluations>

Each sample of the PET fiber-rubber composite was incorporated into a pneumatic tire (tire size: 195/65R15) under the following conditions as a carcass ply fabricated using a rolling device, and the following evaluations were conducted. The evaluation results are summarized in Table 1.

(1) Ply Strength

The ply strength was calculated using the following formula based on the tenacity per one PET fiber cord measured according to ASTM D885 and the count of cords per unit. The results are summarized in Table 1. Higher values indicate greater ply strength.

Formula: Ply strength (N/dm) = tenacity per one PET fiber cord (N) $\times$ count of cords per unit (number/10 cm).

(2) Rolling Resistance

A drum test was conducted in accordance with ISO 28580. The indices of the rolling resistance coefficients for the tires of Comparative Example 2 and Example 1 were calculated relative to the measured rolling resistance coefficient of the tire of Comparative Example 3 being set to 100. The results are summarized in Table 1. For Example 2, the rolling resistance coefficient was predicted based on the test results of Comparative Example 2 and Example 1, as well as tan$\delta$ and the volume ratio of the rubber. The results are also summarized in Table 1. Smaller index values indicate lower rolling resistance. It should be noted that the rolling resistance coefficient of the tire in Comparative Example 1 was not evaluated because the ply strength was low.

[Table 1]

| | | | Comparative Example 1 | Comparative Example 2 | Comparative Example 3 | Example 1 | Example 2 |
|---|---|---|---|---|---|---|---|
| Rubber composition for coating rubber | NR (parts by mass) | | 68 | 68 | 68 | 68 | 70 |
| | SBR1 *1 (parts by mass) | | - | - | - | - | 30 |
| | SBR2 (SBR components) *2 (parts by mass) | | 44 (32) | 44 (32) | 44 (32) | 44 (32) | - |
| | CB1 *3 (parts by mass) | | - | - | - | - | 45 |
| | CB2 *4 (parts by mass) | | 45 | 45 | 45 | 45 | - |
| PET fiber cords | Cord fineness | | 1100 dtex/2 | 1100 dtex/2 | 1670 dtex/2 | 1100 dtex/2 | 1100 dtex/2 |
| | Number of first twists × number of second twists (number/10 cm) | | 47×47 | 47×47 | 39×39 | 47×47 | 47×47 |
| | Cord strength (N) | | 151 | 151 | 227 | 165 | 165 |
| | Count of cords (number/5 cm) | | 54 | 63.1 | 50.7 | 70.5 | 70.5 |
| | Inter-cord spacing (mm) | | 0.396 | 0.331 | 0.326 | 0.179 | 0.179 |
| | Cord diameter (mm) | | 0.530 | 0.530 | 0.660 | 0.530 | 0.530 |
| PET fiber-rubber composite | Fiber occupancy | | 0.290 | 0.312 | 0.318 | 0.379 | 0.379 |
| | Total gage (mm) | | 0.82 | 0.82 | 1.09 | 0.82 | 0.82 |
| | Volume ratio of rubber | | 0.710 | 0.688 | 0.682 | 0.621 | 0.621 |
| | tan $\delta$ of rubber | | 0.15 | 0.15 | 0.15 | 0.15 | 0.10 |
| | A: Cord strength × fiber occupancy rate | | 43.85 | 47.16 | 72.22 | 62.56 | 62.56 |
| | B: tan $\delta$ of coating rubber × rubber occupancy rate | | 0.11 | 0.10 | 0.10 | 0.09 | 0.06 |
| | (A/B)/cord total fineness | | 0.19 | 0.21 | 0.21 | 0.31 | 0.46 |
| Evaluations | Ply strength (N/dm) | | 16308 | 19056 | 23018 | 23265 | 23265 |
| | Rolling resistance (Index) | | - | 98.00 | 100.00 | 98.00 | 97.60 |

1* SBR1: Solution-polymerized SBR, non-oil extended
2* SBR2: Emulsion-polymerized SBR, 27.3 mass% oil extended
3* CB1: GPF-grade carbon black with an $N_2SA$ of 28 $m^2$/g and a DBP of 89 ml/100 g
4* CB2: HAF-grade carbon black with an $N_2SA$ of 71 $m^2$/g and a DBP of 103 ml/100 g

It is understood from the results in Table 1 that Comparative Examples 1 and 2 had low ply strengths. When the results of Comparative Example 3 is compared with those of Examples 1 and 2, although the ply strength was at a comparable level, the tires in Examples 1 and 2 exhibited lower rolling resistance. Thus, it can be concluded that the ply strength and low rolling resistance characteristic of the samples of the examples were balanced at a higher level compared to those of the samples of the comparative examples.

INDUSTRIAL APPLICABILITY

According to the present disclosure, it is possible to provide a PET fiber-rubber composite that is excellent in strength and low rolling resistance characteristic when the PET fiber-rubber composite is applied to a tire, without incurring an increase in the total fineness of the cords or the thickness of the sheet. Furthermore, according to the present disclosure, it is possible to provide a tire that is excellent in durability and low rolling resistance characteristic.

REFERENCE SIGNS LIST

10      PET fiber cords
11      PET fibers
20      Coating rubber
100     PET fiber-rubber composite

**Claims**

1.   A sheet-like PET fiber-rubber composite comprising PET fiber cords coated with a coating rubber,

the PET fiber-rubber composite satisfying the following formula (1):

$$(A/B) \,/\, \text{a cord total fineness} \geq 0.3 \qquad\qquad \dots (1)$$

where A is defined as: a cord strength (N) $\times$ a fiber occupancy rate,
the fiber occupancy rate is defined as: a cross-sectional area of a PET fiber cord ($mm^2$) / (a thickness of the composite (mm) $\times$ (a diameter of a PET fiber cord (mm) + an inter-cord spacing of the PET fiber cords (mm))), and
B is defined as: $\tan\delta$ of the coating rubber $\times$ a rubber occupancy rate,
the rubber occupancy rate is defined as: (1 - the fiber occupancy rate), and
the cord total fineness is a sum of finenesses of PET fibers forming a cord.

2.   The PET fiber-rubber composite according to claim 1, wherein the cord strength of the PET fiber cord is 160 N or more.

3.   The PET fiber-rubber composite according to claim 1 or 2, wherein a tensile strength of the sheet-like PET fiber-rubber composite is more than 2300 N/cm.

4.   The PET fiber-rubber composite according to claim 1 or 2, wherein a fineness of the PET fiber cord is from 1100/2 to 2000/2 dtex.

5.   The PET fiber-rubber composite according to claim 1 or 2, wherein a thickness of the sheet-like PET fiber-rubber composite is 1.2 mm or less.

6.   The PET fiber-rubber composite according to claim 1 or 2, wherein the PET fiber-rubber composite satisfies the following formula (1)':

$$(A/B) \,/\, \text{the cord total fineness} \geq 0.45 \qquad\qquad \dots (1)'.$$

7.   The PET fiber-rubber composite according to claim 1 or 2, wherein the coating rubber comprises:

a rubber component comprising 60 mass% or more of natural rubber and 40 mass% or less of non-oil extended styrene-butadiene rubber; and
30 to 60 parts by mass of carbon black with a nitrogen adsorption specific surface area ($N_2SA$) of 60 $m^2$/g or less per 100 parts by mass of the rubber component.

8.   A tire comprising the PET fiber-rubber composite according to claim 1 or 2.

9.   The tire according to claim 8, wherein the PET fiber-rubber composite is used for a carcass ply.

FIG. 1

# EP 4 596 257 A1

## INTERNATIONAL SEARCH REPORT

| | International application No. |
|---|---|
| | **PCT/JP2023/033783** |

### A. CLASSIFICATION OF SUBJECT MATTER

**B60C 9/00**(2006.01)i; **B60C 1/00**(2006.01)i; **B60C 9/04**(2006.01)i; **C08K 3/04**(2006.01)i; **C08L 7/00**(2006.01)i; **C08L 9/04**(2006.01)i; **C08L 9/06**(2006.01)i; **C08L 67/02**(2006.01)i; **D02G 3/48**(2006.01)i; **D06M 15/693**(2006.01)i; **D07B 1/16**(2006.01)i
FI:   B60C9/00 B; B60C1/00 C; B60C9/04 D; C08K3/04; C08L7/00; C08L9/04; C08L9/06; C08L67/02; D02G3/48; D06M15/693; D07B1/16

According to International Patent Classification (IPC) or to both national classification and IPC

### B. FIELDS SEARCHED

Minimum documentation searched (classification system followed by classification symbols)
    B60C1/00-19/12; B32B 1/00-43/00; D02G1/00-3/48; D06M13/00-15/00; D07B1/00-9/00

Documentation searched other than minimum documentation to the extent that such documents are included in the fields searched
    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-24509 A (THE YOKOHAMA RUBBER CO., LTD.) 22 February 2021 (2021-02-22) examples | 1-9 |
| A | JP 11-334313 A (THE YOKOHAMA RUBBER CO., LTD.) 07 December 1999 (1999-12-07) table 1 | 1-9 |
| A | JP 2010-120400 A (BRIDGESTONE CORP.) 03 June 2010 (2010-06-03) table 1 | 1-9 |
| A | JP 2003-54215 A (SUMITOMO RUBBER INDUSTRIES, LTD.) 26 February 2003 (2003-02-26) tables 2, 3 | 1-9 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

### INTERNATIONAL SEARCH REPORT
Information on patent family members

International application No.

**PCT/JP2023/033783**

| Patent document cited in search report | | | Publication date (day/month/year) | Patent family member(s) | Publication date (day/month/year) |
|---|---|---|---|---|---|
| JP | 2021-24509 | A | 22 February 2021 | (Family: none) | |
| JP | 11-334313 | A | 07 December 1999 | (Family: none) | |
| JP | 2010-120400 | A | 03 June 2010 | (Family: none) | |
| JP | 2003-54215 | A | 26 February 2003 | US 2003/0094228 A1 tables 2, 3 EP 1283113 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011251582 A
- JP 2023040157 A
- JP 2023030762 A
- WO 2022130879 A1